(19) Europäisches Patentamt
European Patent Office
Office européen des brevets

(11) **EP 3 819 670 B1**

(12) **FASCICULE DE BREVET EUROPEEN**

(45) Date de publication et mention
de la délivrance du brevet:
**14.09.2022 Bulletin 2022/37**

(51) Classification Internationale des Brevets (IPC):
**G01S 13/91** *(2006.01)* **G01S 13/00** *(2006.01)*
**G01S 13/87** *(2006.01)*

(21) Numéro de dépôt: **20202811.4**

(52) Classification Coopérative des Brevets (CPC):
**G01S 13/913; G01S 13/006; G01S 13/878**

(22) Date de dépôt: **20.10.2020**

(54) **PROCÉDÉ DE TRAITEMENT POUR RADAR MIMO COHÉRENT TRAITANT DES FORMES D'ONDES DDMA**

VERARBEITUNGSVERFAHREN FÜR KOHÄRENTEN MIMO-RADAR, DER DDMA-WELLENFORMEN VERARBEITET

PROCESSING METHOD FOR COHERENT MIMO RADAR SYSTEM PROCESSING DDMA WAVEFORMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2019 FR 1912182**

(43) Date de publication de la demande:
**12.05.2021 Bulletin 2021/19**

(73) Titulaire: **THALES**
**92400 Courbevoie (FR)**

(72) Inventeurs:
• **COTTRON, Rodolphe**
**33700 MERIGNAC (FR)**
• **CORNIC, Pascal**
**29820 GUILERS (FR)**
• **VEYRAC, Yoan**
**33700 MERIGNAC (FR)**

(74) Mandataire: **Atout PI Laplace**
**Immeuble "Visium"**
**22, avenue Aristide Briand**
**94117 Arcueil Cedex (FR)**

(56) Documents cités:
• **JOSHUA KANTOR ET AL: "Airborne GMTI using MIMO techniques", RADAR CONFERENCE, 2010 IEEE, IEEE, PISCATAWAY, NJ, USA, 10 mai 2010 (2010-05-10), pages 1344-1349, XP031696524, ISBN: 978-1-4244-5811-0**
• **LI FUYOU ET AL: "Blind Velocities Mitigation For DDMA MIMO GMTI Radar Via Multi-Frequency Signals", 2018 19TH INTERNATIONAL RADAR SYMPOSIUM (IRS), GERMAN INSTITUTE OF NAVIGATION - DGON, 20 juin 2018 (2018-06-20), pages 1-9, XP033393905, DOI: 10.23919/IRS.2018.8447976**
• **BROWN MATTHEW ET AL: "Phased array antenna calibration using airborne radar clutter and MIMO", 2014 48TH ASILOMAR CONFERENCE ON SIGNALS, SYSTEMS AND COMPUTERS, IEEE, 2 novembre 2014 (2014-11-02), pages 1150-1156, XP032769070, DOI: 10.1109/ACSSC.2014.7094638**

**Description**

L'invention se situe dans le domaine des radars MIMO (« Multiple Input, Multiple Output », ou « entrées multiples, sorties multiples ») avec une forme d'onde DDMA (« Doppler Division Multiple Access », ou « accès multiple à division Doppler »). L'invention est particulièrement adaptée aux radars millimétriques, en particulier ceux opérant dans la bande W (fréquence comprise entre 75 et 110 GHz). L'invention peut être appliquée, de façon non exclusive, aux radars aéroportés, notamment pour de l'aide à l'atterrissage.

Les radars MIMO permettent d'améliorer les performances de détection des radars dans un certain nombre d'applications, notamment les radars aéroportés, en offrant en particulier une meilleure résolution angulaire, et une meilleure résolution Doppler. Un radar MIMO est constitué de plusieurs voies de réception et également de plusieurs voies d'émission. On distingue habituellement deux sortes de radars MIMO : les radars MIMO multistatiques et les radars MIMO cohérents. Dans les radars MIMO multistatiques, certaines des voies d'émission et/ou de réception ne se trouvent pas sur le même site, ou sur le même porteur. Dans les radars MIMO cohérents, les voies d'émission et de réception sont toutes co-localisées sur le porteur : on parle alors de radar MIMO cohérent. Dans la présente invention, il est supposé que le radar est cohérent.

La forme d'onde DDMA, utilisée dans les radars MIMO, est particulièrement intéressante, car elle présente une bonne orthogonalité, et donc une bonne isolation, entre les canaux. En effet, les signaux émis sur chacune des antennes d'émission sont identiques, à la différence près que les fréquences centrales des signaux transmis par les différentes antennes d'émission sont légèrement décalées les unes par rapport aux autres, afin que ces signaux puissent être séparés dans le domaine Doppler. Ainsi, chacune des formes d'onde est générée en appliquant une modulation de phase différente entre chaque canal d'émission.

Puis, les signaux reçus sont traités par un ensemble de filtres adaptés, Chaque filtre est adapté à une forme d'onde, et isole chaque canal d'émission.

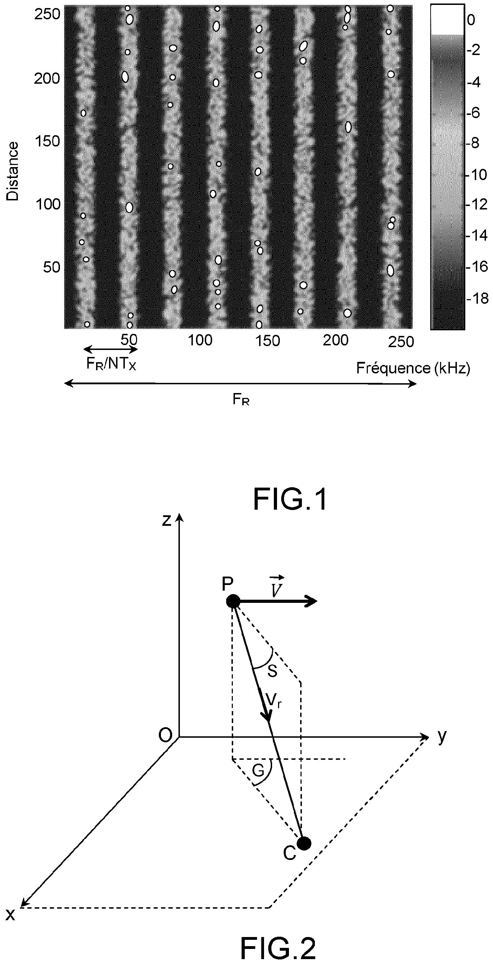

La figure 1 illustre la représentation des signaux reçus sur une voie de réception, où chaque bande de signal (verticale dans le sens de la figure) correspond aux échos de cibles fixes ou mobiles de chacune des voies d'émission, après un traitement Doppler. Sur la figure 1, le radar comprend $NT_X$=8 voies d'émission, et chaque voie d'émission est décalée, sur la figure 1, de $F_R/NT_X$, où $F_R$ est la fréquence de récurrence (ou de répétition) des impulsions radar.

Les signaux reçus sur toutes les voies de réception, et émis sur toutes les voies d'émission, sont ensuite combinés afin d'effectuer des traitements de FFC (Formation de Faisceau par Calcul). On rappelle que, pour effectuer des traitements de FFC, on cherche à optimiser la liaison émission/réception, sur chaque paire voie d'émission/voie de réception, en répartissant la puissance sur les antennes d'émission de manière à obtenir le maximum d'énergie dans une direction donnée.

Afin d'effectuer les traitements de FFC, il est cependant primordial d'identifier à quelle voie d'émission correspond chaque bande de signal reçu. L'écart entre les bandes de signaux reçus est connu car lié à la loi de phase de la forme d'onde DDMA, mais il reste à connaitre le positionnement absolu de ces bandes, à savoir à quelle voie d'émission correspond au moins une des bandes de signal reçue. Les autres voies peuvent ensuite être déduites grâce à la connaissance du décalage en phase de chaque voie d'émission.

Si on prend comme référence la voie d'émission ayant une rampe de phase nulle, la bande de signal reçu est centrée sur la fréquence Doppler liée à la vitesse et à la direction de visée du radar. Cette fréquence Doppler doit donc être connue avec une précision suffisante pour ne pas confondre les différentes bandes.

La figure 2 illustre un vecteur $\vec{V}$ représentant le déplacement du porteur/radar, ainsi que l'axe de visée du radar vers la cible C.

De façon connue, la fréquence Doppler $f_D$ vaut :

$$f_D = \frac{2}{\lambda}.V.\cos S.\cos G = \frac{2.Vr}{\lambda},$$

où V est la vitesse du radar, S et G respectivement le site et le gisement de visée, $\lambda$ est la longueur d'onde du radar, et $V_R$ la vitesse radiale relative du radar par rapport à la cible, qui correspond à la projection de la vitesse du radar sur l'axe de visée.

La sélection des échantillons associés à la voie d'émission ayant la rampe de phase nulle dépend ainsi de la connaissance de $V_R$ et ceci de façon d'autant plus précise que la résolution fréquentielle $c_F$ et la longueur d'onde des impulsions sont faibles. Cette connaissance de $V_R$ est encore plus critique quand le radar est ambigu en vitesse, du fait des repliements spectraux dans le domaine Doppler.

Par exemple, si la résolution fréquentielle vaut $c_F$ = 10 Hz, et la fréquence du radar est $F_E$ =3 GHz (bande S, $\lambda$ = 0,1 m) ; pour connaitre le positionnement du signal à la case près, la précision de $V_R$ est $\lambda/2^* c_F$ = 0.5 m/s, ce qui est relativement accessible avec une centrale inertielle classique ou à l'aide d'un GPS.

Dans les mêmes conditions, pour un radar en bande X ($F_E$ =10 GHz, $\lambda$ = 3 cm), la précision de $V_R$ devient $\lambda/2^* c_F$ = 0.15 m/s = 15 cm/s, ce qui nécessite une centrale inertielle de haute qualité.

Maintenant, toujours dans les mêmes conditions, pour un radar millimétrique (bande W comprise entre 75 et 110 GHz), la précision de $V_R$ devient de l'ordre de 1 cm/s, ce qui nécessite une centrale inertielle de très haute précision qui n'est pas toujours compatibles avec des systèmes à bas coût.

L'article « Airborne GMTI using MIMO techniques » (J. Kantor & S.K. Davis, 2011, Technical Report 1150, Lincoln Laboratory) décrit un système MIMO avec une forme d'onde DDMA. Dans cet article, il n'est pas fait mention de la méthode de sélection des échantillons provenant des différentes voies d'émission, mais le radar utilisé étant en bande S, comme indiqué précédemment, la précision requise sur la vitesse du porteur n'est pas problématique.

L'objet de cette invention est de proposer un système qui non seulement ne nécessite pas une grande précision sur la connaissance de la vitesse radiale relative du radar par rapport à la cible, mais qui permet même de s'en affranchir.

Un objet de l'invention est donc un procédé de traitement de radar MIMO cohérent traitant des formes d'ondes DDMA et comprenant $NT_X$ voies d'émission et $NR_X$ voies de réception, comprenant les étapes de :

a) génération de formes d'ondes sur au plus $NT_X$ voies d'émission, les formes d'ondes, modulo la fréquence $F_R$ de répétition des impulsions radar, étant identiques d'un émetteur à l'autre, à une rampe de phase près propre à chaque voie d'émission ;

b) génération, pour au moins une voie de réception, d'une représentation distance-Doppler des échos des formes d'ondes émises, où, pour chaque voie de réception, les échos d'une voie d'émission sur une pluralité de cases distance occupent au moins une case fréquence dans le spectre Doppler, appelée bande de signal, chaque bande de signal étant propre à une des voies d'émission, l'emplacement des bandes de signal dans le spectre Doppler étant déterminé en fonction de la rampe de phase appliquée à chaque voie d'émission, les formes d'ondes étant générées de façon à laisser non occupée une partie du spectre Doppler entre deux bandes de signal ;

c) identification de la voie d'émission correspondant à chaque bande de signal, à partir de la représentation distance-Doppler des échos des formes d'ondes émises.

Avantageusement, l'étape c) comprend les sous-étapes de :

- calcul d'un signal dit d'écho obtenu en sommant la puissance des échos de chaque bande de signal sur l'ensemble des cases distance ;

- génération d'un signal dit signal motif, sur autant de cases fréquence que la représentation distance-Doppler des échos des formes d'ondes émises, les voies d'émission étant numérotées par ordre croissant en fonction de la rampe de phase appliquée à la voie d'émission, le signal motif étant généré de telle sorte que les voies d'émission soient classées, selon l'ordre croissant, en tenant compte de la partie non occupée du spectre Doppler ;

- calcul d'un signal d'intercorrélation entre le signal d'écho et le signal motif ;

- identification de la voie d'émission correspondant à chaque bande de signal à partir du maximum du signal d'intercorrélation.

Avantageusement, dans l'étape d'identification, la position du maximum du signal d'intercorrélation correspond aux échos de la première voie d'émission dans le spectre Doppler, la première voie d'émission étant définie comme étant celle pour laquelle la rampe de phase est nulle.

Avantageusement, la partie non occupée du spectre Doppler est obtenue en éteignant une des $NT_X$ voies d'émission, le signal motif étant non nul pour chaque case fréquence $k*F_R/NT_X$, où $k = \{0, ..., NT_X - 1\}$, et nul dans les autres cases fréquence.

Avantageusement, la partie non occupée du spectre Doppler est obtenue en déterminant les rampes de phase de façon à ce que les bandes de signal soient espacées de $F_R/NT_{X2}$ cases fréquence dans le spectre Doppler, où $NT_{X2}$ est un entier tel que $NT_{X2} > NT_X$, le signal motif étant non nul pour chaque case fréquence $k*F_R/NT_{X2}$, pour $k = \{0, ..., NT_X - 1\}$, et nul dans les autres cases fréquence.

Avantageusement, la représentation distance-Doppler des échos est obtenue par une transformée de Fourier rapide (FFT) sur une pluralité de points d'acquisition, le nombre de points d'acquisition étant complété en rajoutant des zéros pour obtenir au total $N_{FFT}$ points, $N_{FFT}$ étant déterminé de façon à ce qu'il soit un multiple entier du nombre de voies d'émission $NT_X$, si $NT_X$ n'est pas une puissance de deux.

Avantageusement, la représentation distance-Doppler des échos est obtenue par une transformée de Fourier rapide (FFT) sur des séquences d'impulsions codées sur un intervalle de traitement cohérent (CPI), le nombre d'impulsions par intervalle de traitement cohérent (CPI) étant adapté pour rendre celui-ci multiple du nombre de voies d'émission.

Un autre objet de l'invention est un procédé de traitement de radar MIMO cohérent traitant des formes d'ondes DDMA et comprenant $NT_X$ voies d'émission et $NR_X$ voies de réception, comprenant les étapes de :

a) génération de formes d'ondes sur au plus $NT_X$ voies d'émission, les formes d'ondes, modulo la fréquence $F_R$ de répétition des impulsions radar, étant identiques d'un émetteur à l'autre, à une rampe de phase près propre à chaque voie d'émission ;

b) génération, pour au moins une voie de réception, d'une représentation distance-Doppler des échos des formes d'ondes émises, où, pour chaque voie de réception, les échos d'une voie d'émission sur une pluralité de cases distance occupent au moins une case fréquence dans le spectre Doppler, appelée bande de signal, chaque bande de signal étant propre à une des voies d'émission, l'emplacement des bandes de signal dans le spectre Doppler étant déterminé en fonction de la rampe de phase appliquée à chaque voie d'émission, les formes d'ondes étant générées de façon à ce que l'espacement entre au moins deux bandes de signal consécutives soit différent de l'espacement entre les autres bandes de signal consécutives ;

c) identification de la voie d'émission correspondant à chaque bande de signal, à partir de la représentation distance-Doppler des échos des formes d'ondes émises.

Avantageusement, les espacements entre deux bandes de signal consécutives sont tous différents.
Avantageusement, les bandes de signal sont espacées selon une loi d'espacement prédéterminée.
Avantageusement, l'espacement entre chacune des bandes de signal est déterminé de façon à ce que la moyenne des espacements soit égale à $F_R/NT_X$.
Avantageusement, la représentation distance-Doppler des échos est obtenue par une transformée de Fourier rapide (FFT) sur une pluralité de points d'acquisition, le nombre de points d'acquisition étant complété en rajoutant des zéros pour obtenir au total points, étant déterminé de façon à ce que l'espacement entre deux bandes consécutives soit un multiple entier de $F_R/N_{FFT}$.
Avantageusement, la représentation distance-Doppler des échos est obtenue par une transformée de Fourier rapide (FFT) sur des séquences d'impulsions codées sur un intervalle de traitement cohérent (CPI), le nombre d'impulsions $N_{REC}$ par intervalle de traitement cohérent (CPI) étant déterminé de façon à ce que l'espacement entre deux bandes consécutives soit un multiple entier de $F_R/N_{REC}$.
Avantageusement, le procédé comprend une étape supplémentaire de traitement de formation par le calcul, dans laquelle on combine, de façon pondérée, les formes d'ondes avec les échos provenant des différentes voies de réception.
Un autre objet de l'invention est un radar MIMO apte à mettre en œuvre le procédé précité.
D'autres caractéristiques, détails et avantages de l'invention ressortiront à la lecture de la description faite en référence aux dessins annexés donnés à titre d'exemple et qui représentent, respectivement :

[Fig. 1] La figure 1, déjà décrite, représente une forme d'onde DDMA selon l'état de l'art ;

[Fig. 2] La figure 2, déjà décrite, représente le vecteur porteur du radar, par rapport à une cible ;

[Fig. 3] La figure 3 représente les diagrammes illustrant le procédé de traitement de radar MIMO selon un premier mode de réalisation de l'invention, dans lequel une des voies d'émission est éteinte ;

[Fig. 4] La figure 4 représente les diagrammes illustrant le procédé de traitement de radar MIMO selon un second mode de réalisation de l'invention, dans lequel l'espacement entre les bandes est modifié.

[Fig. 5] La figure 5 représente les diagrammes illustrant le procédé de traitement de radar MIMO selon un troisième mode de réalisation de l'invention, dans lequel l'espacement entre les bandes est non uniforme.

Selon le premier et le deuxième mode de réalisation de l'invention, le procédé comprend trois étapes.
Dans une première étape, le radar, qui comprend $NT_X$ voie d'émission, génère des formes d'ondes sur au plus $NT_X$ voies d'émission. Selon un premier mode de réalisation, détaillé ci-après, une des $NT_X$ voies d'émission est éteinte. Selon le deuxième mode de réalisation, également détaillé ci-après, toutes les voies d'émission sont activées. Le principe de la forme d'ondes DDMA, comme expliqué précédemment, consiste à émettre, à chaque période de récurrence, des impulsions radar identiques d'une voie d'émission à l'autre, à une rampe de phase près propre à chaque voie d'émission. La rampe de phase est créée par un déphaseur, qui est un composant relativement simple à intégrer. Puis, chacun des échos reçus est traité par un banc de filtres adapté, à savoir un filtre par forme d'onde.
Le procédé de traitement selon l'invention peut être mis en œuvre au niveau d'une des voies de réception, ou de plusieurs, voire de la totalité. L'application à la formation de faisceau par le calcul nécessite en effet d'associer toutes les voies de réception aux voies d'émission, mais cette application n'est pas limitative. De façon générale, le procédé selon l'invention permet, dans un contexte MIMO, d'associer, même pour une seule voie de réception, chaque bande de signal à une des voies d'émission.
Pour cela, dans la deuxième étape b), une représentation distance-Doppler des échos des formes d'ondes émises est générée. Comme illustré par la figure 1, déjà décrite, la représentation distance-Doppler comprend en abscisse les cases fréquence (ou le nombre de points de la FFT, acronyme de « Fast Fourier Transform », ou « Transformée de Fourier Rapide »), et en ordonnée les cases distance. Chaque bande de signal est centrée sur la case fréquence du décalage Doppler de chaque voie d'émission. Les bandes de signal sont ainsi espacées de $F_R/NT_X$ , où $F_R$ est la fréquence de répétition des impulsions radar (inverse de la période de répétition).
Du fait de la nature-même de la forme d'onde DDMA, qui introduit un déphasage pour chacune des voies d'émission, ce déphasage se retrouve dans le spectre Doppler, dans l'espacement des bandes de signal. Chacun des échos reçus est traité par un banc de filtres adapté, à savoir un filtre par forme d'onde. A la réception, le processeur du radar MIMO retire le déphasage qui a été appliqué à l'émission.

La particularité du procédé selon l'invention est que les formes d'ondes sont générées de façon à ce qu'une partie du spectre Doppler est laissée inoccupée entre deux bandes de signal. Pour un radar MIMO DDMA de l'état de l'art, les déphasages appliqués sont déterminés de façon à ce que les bandes de signal soient toutes uniformément réparties dans le spectre Doppler. En laissant au contraire une partie du spectre inoccupé, l'identification de la voie d'émission correspondant à chacune des bandes de signal est facilitée, comme démontré par la suite (étape c) du procédé).

Avantageusement, l'étape c) du procédé de traitement comprend une première sous-étape de calcul d'un signal dit d'écho. Le signal d'écho est obtenu en sommant, pour chaque bande de signal, la puissance des échos sur l'ensemble des cases distance. Ainsi, on obtient un signal représentatif de l'énergie par bande de signal. Le signal d'écho est ainsi directement et facilement (à savoir sans complexité calculatoire) obtenu à partir de la représentation distance-Doppler.

Puis, dans une deuxième sous-étape, un signal dit signal motif est généré, sur autant de cases fréquence que la représentation distance-Doppler des échos des formes d'ondes émises. Le signal motif est une représentation, dans l'ordre des voies d'émission, du décalage induit par la rampe de phase appliquée à chaque voie d'émission. Ainsi, on associe dans le radar MIMO à chaque voie d'émission la rampe de phase qui est appliquée. Puis un numéro est attribué à la voie d'émission : n° 1 pour la voie d'émission ayant une rampe de phase nulle, n° 2 pour la première rampe de phase, et ainsi de suite. Ainsi, on attribue à chaque voie d'émission un numéro de 1 à $NT_X$. Le signal motif est un signal binaire, qui vaut 1 (ou toute autre valeur différente de zéro, du moment que cette valeur est la même pour toutes les voies d'émission) à chaque case fréquence correspondant au décalage induit par la pente des différentes lois de phase et 0 ailleurs. Par ailleurs, le signal motif est également mis à 0 dans la partie non occupée du spectre Doppler.

Un signal d'intercorrélation entre le signal d'écho et le signal motif est ensuite calculé. Le signal d'intercorrélation correspond à la fonction d'intercorrélation entre le signal d'écho et le signal motif. Chacun des deux signaux peut être considéré comme étant un signal de type « peigne ». Le signal d'intercorrélation est maximum quand les deux peignes se rencontrent.

La position du maximum du signal d'intercorrélation indique la position, dans le spectre Doppler, de la première voie d'émission. La position des autres voies d'émission se déduit par décalage selon l'espacement théorique entre les bandes de signal, modulo la fréquence de récurrence, ou modulo le nombre de points de la FFT.

Le traitement décrit est effectué de façon systématique, sur chaque rafale du signal radar.

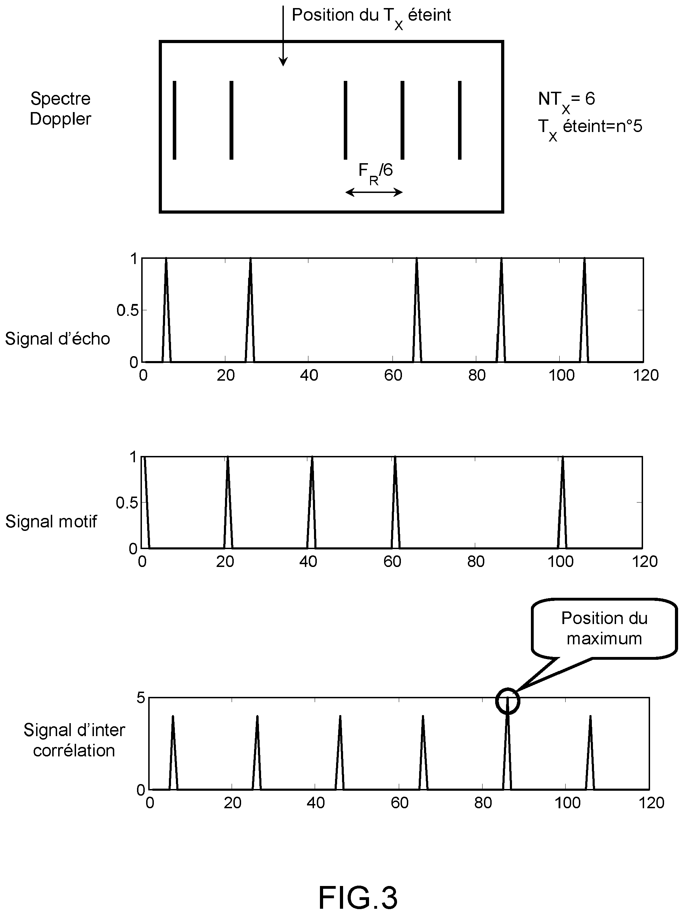

La figure 3 illustre un premier mode de réalisation du procédé de traitement selon l'invention. D'après le premier mode de réalisation, la partie du spectre inoccupé est produite en éteignant une des voies d'émission. En effet, les radars MIMO disposent généralement de beaucoup de voies d'émission, par exemple de l'ordre de la dizaine, et l'extinction d'une des voies n'affecte le bilan radar que d'une dizaine de pourcents, dans le cas où le radar comprend dix voies d'émission.

Sur l'exemple de la figure 3, le radar MIMO dispose de $NT_X=6$ voies d'émission, et la cinquième voie d'émission est éteinte.

L'extinction d'une des voies d'émission peut être effectuée de différentes manières. Par exemple, le contrôle d'amplitude, utilisé dans les antennes actives du radar pour le contrôle d'amplitude et de phase, peut appliquer une amplitude nulle sur la voie d'émission à éteindre. Cette solution a l'avantage de pouvoir être reconfigurée en mission, en modifiant la commande du contrôle d'amplitude. En alternative, la sortie des émetteurs de puissance de la voie d'émission à atteindre n'est pas câblée, ce qui constitue une solution permanente, et qui ne peut être modifiée qu'entre deux missions. Une autre possibilité serait d'ajouter un interrupteur commandé en amont de chaque émetteur de puissance.

Le choix de la voie d'émission à éteindre peut être totalement aléatoire, à partir du moment où le numéro de la voie d'émission éteinte est connue. Le choix de la voie n'a aucune influence sur l'issue du procédé.

Le signal d'écho est obtenu en sommant les puissances de chaque case distance pour chaque bande de signal. Dans le spectre Doppler, tous les échos des voies d'émission sont espacés de $F_R/NT_X$, sauf, par définition, dans la bande où la voie d'émission a été éteinte. Sur la figure 3, les échos sont reçus sur 120 points de FFT, sans que cette valeur ne soit limitative dans le cadre de la présente invention.

Le signal motif est représenté sur autant de cases fréquence que le spectre Doppler des échos reçus. Le signal motif est non nul (il a par exemple pour valeur 1) pour chaque case fréquence $k*F_R/NT_X$, où k = {0, ..., $NT_X-1$}, correspondant à une bande de signal, à l'exception de la bande de signal de l'émetteur éteint. Le signal motif est également nul dans les autres cases fréquence. Dans l'exemple de la figure 3, la cinquième voie d'émission (parmi les six voies d'émission) est éteinte. Ainsi, le signal motif est un peigne ayant une valeur différente de 0 dans les cases 0, $F_R/6$, $2*F_R/6$, $3*F_R/6$ et $5*F_R/6$, et zéro ailleurs.

Enfin, on calcule le signal d'intercorrélation entre le signal d'écho et le signal motif. Sur la figure 3, le signal d'intercorrélation, qu'il convient de lire en lien avec le spectre Doppler des échos reçus, est maximal à une position correspondant, sur le spectre Doppler, à la bande de signal de la première voie d'émission (à savoir la deuxième bande de signal en partant de la droite du spectre dans l'exemple de la figure 3). Ainsi, la deuxième bande de signal en partant de la droite correspond aux échos issus de la première voie d'émission. Puis, la position des autres voies d'émission peut être déduite par simple décalage de la gauche vers la droite, de façon circulaire, lié à la rampe de phase. Dans l'exemple de la figure 3, la première bande de signal en partant de la droite correspond aux échos de la deuxième voie d'émission, la première bande à gauche correspond aux échos de la troisième voie d'émission, et ainsi de suite.

On associe ainsi les signaux provenant de chacune des voies d'émission dans le spectre Doppler, sans avoir recours à des informations sur la vitesse radiale du porteur, qui correspond à la projection de la vitesse du porteur sur l'axe de visée.

Le premier mode de réalisation décrit ci-dessus est particulièrement adapté aux radars MIMO DDMA ayant un nombre élevé de voies d'émission, de l'ordre de la dizaine par exemple. Ainsi, le bilan radar est peu affecté par l'extinction d'une voie d'émission.

Le fait d'éteindre une des voies d'émission peut néanmoins s'avérer pénalisant du point de vue du bilan radar, lorsque le radar MIMO dispose de peu de voies d'émission. Par exemple, si le radar MIMO ne comprend que quatre voies d'émission, l'extinction de l'une des voies affecte le bilan radar de l'ordre de 25%, ce qui ne représente pas une utilisation optimale du radar.

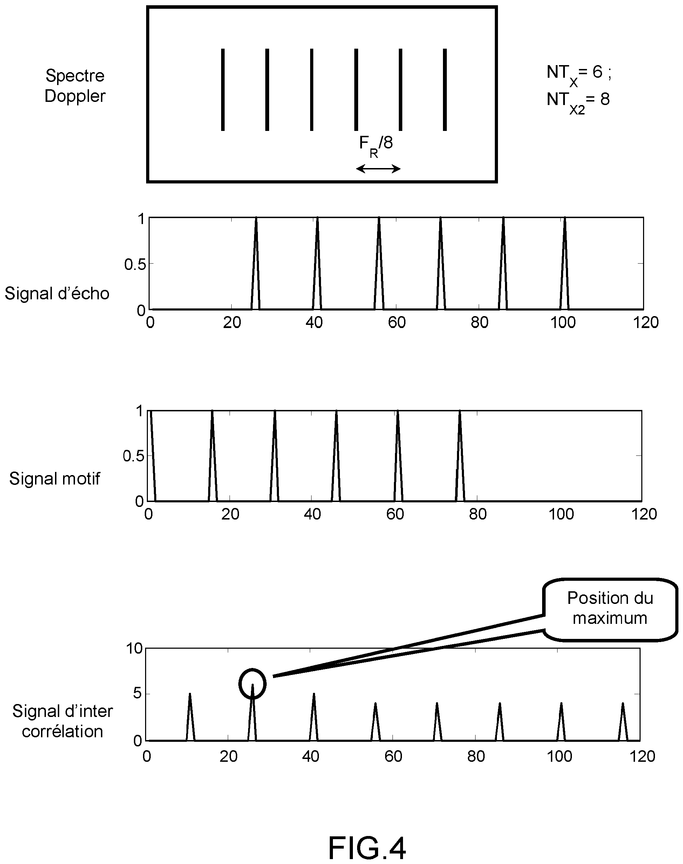

Le deuxième mode de réalisation du procédé de traitement selon l'invention permet également d'associer les voies d'émission à chacune des bandes de signal. Pour cela, on génère les rampes de phase de façon à ce que les bandes de signal soient espacées de $F_R/NT_{X2}$ cases fréquence dans le spectre Doppler, où $NT_{X2}$ est un entier tel que $NT_{X2} > NT_X$. Par exemple, $NT_{X2} = NT_X + 1$. Dans l'exemple de la figure 4, $NT_{X2} = NT_X + 2$, avec $NT_X = 6$ et $NT_{X2} = 8$.

L'espacement ainsi généré crée également un espace vide dans l'espace Doppler, comme pour le premier mode de réalisation. Le spectre Doppler illustré en figure 4 représente six bandes de signal espacées de $F_R/8$ dans la représentation distance-Doppler des échos des formes d'ondes émises.

Comme pour le premier mode de réalisation, un signal d'écho est créé. Dans le deuxième mode de réalisation, le signal d'écho a pour valeur la somme des puissances des échos reçus sur toutes les cases distance d'une bande de signal. Le signal d'écho a donc $NT_X$ valeurs positives, espacées de $F_R/NT_{X2}$, sur cases fréquences.

Par ailleurs, le signal motif est non nul (il a par exemple pour valeur 1) pour chaque case fréquence $k*F_R/NT_{X2}$, pour $k = \{0, ..., NT_X - 1\}$, et nul dans les autres cases fréquence. Le signal motif est représenté sur autant de cases fréquence que le spectre Doppler des échos reçus. Dans l'exemple de la figure 4, le signal motif prend la valeur « 1 » à l'abscisse 0, ainsi qu'à chaque case fréquence espacée de $F_R/NT_{X2}$, et la valeur « 0 » ailleurs.

Le signal d'intercorrélation correspond à la fonction d'intercorrélation entre le signal d'écho et le signal motif. Son maximum indique la première voie d'émission, à savoir celle pour laquelle la rampe de phase appliquée à l'émission est nulle.

Dans l'exemple de la figure 4, en superposant le signal d'intercorrélation et le spectre Doppler, il apparait que le maximum du signal d'intercorrélation correspond à la bande de signal la plus à gauche dans le spectre Doppler. La deuxième bande la plus à gauche correspond à la deuxième voie d'émission, et ainsi de suite. Comme pour le premier mode de réalisation, l'espace vide créé dans le spectre Doppler permet d'identifier le positionnement relatif des signaux, à savoir de quelle voie d'émission ils sont issus, sans connaissance de la vitesse radiale du porteur vis-à-vis de la cible.

L'espacement, bien qu'uniforme, entre les bandes de signal DDMA (qui vaut $F_R/NT_X$ ou $F_R/NT_{X2}$, selon le premier ou le deuxième mode de réalisation), n'est pas toujours égal à un nombre entier de cases fréquence. Cette situation se produit si $NT_X$ ou $NT_{X2}$ (selon le deuxième mode de réalisation) n'est pas une puissance de deux, alors que le nombre de points sur lesquels la FFT est effectuée est en général une puissance de deux. Il faudrait dans ce cas soit prendre la case fréquence la plus proche, mais un même écho issu de différentes voies d'émission serait échantillonné différemment d'une bande de signal à l'autre, ce qui introduirait une modulation d'amplitude non désirée, et donc une dégradation du résultat de la FFC. L'autre solution serait de réaliser une interpolation des signaux de façon à remettre les signaux sur une grille d'échantillonnage commune entre les différents canaux DDMA, ou de façon équivalente, effectuer une transformée de Fourier Inverse, appliquer numériquement la rampe de phase opposée à celle utilisée à l'émission puis refaire la Transformée de Fourier Directe pour venir sélectionner les échantillons autour de la case fréquence nulle. Toutes ces opérations conduisent à un obtenir une FFC sans défaut, mais au prix d'une complexité calculatoire élevée.

Pour pallier à cela, il est proposé de compléter le nombre de points d'acquisition, en rajoutant des zéros dans le domaine temporel (technique de « zero-padding » selon la terminologie anglo-saxonne), jusqu'à ce que le nombre de points $N_{FFT}$ de la FFT soit un multiple entier du nombre de voies d'émission $NT_X$.

Par exemple, si on a $NT_X = 12$ voies d'émission et $N_{REC} = 512$ points sur laquelle la FFT est initialement prévue (on rappelle que $T_E = 1/c_F = N_{REC}/F_R$), il faut réaliser une FFT de taille $N_{FFT} = 540$ qui est multiple de $NT_X = 12$.

En alternative, le nombre d'impulsions par intervalle de traitement cohérent (CPI) est adapté pour rendre celui-ci multiple du nombre de voies d'émission.

Par exemple, avec $NT_X = 12$, au lieu d'utiliser $N_{REC} = 512$, on prendra $N_{REC} = 480$ ou $N_{REC} = 540$, ce qui permet de faire une FFT sans zero-padding, tout en restant multiple de NTx.

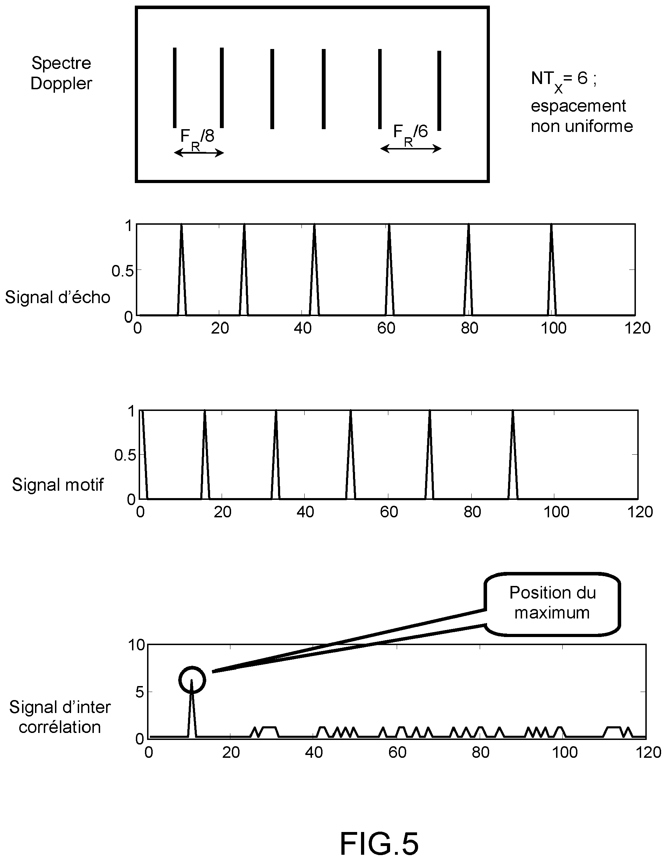

La figure 5 illustre un troisième mode de réalisation de l'invention.

L'étape a) du procédé selon le troisième mode de réalisation de l'invention est identique à l'étape a) des deux premiers modes de réalisation.

Dans l'étape b), on génère, pour au moins une voie de réception, une représentation distance-Doppler des échos des formes d'ondes émises. Pour chaque voie de réception, les échos d'une voie d'émission sur une pluralité de cases distance occupent au moins une case fréquence dans le spectre Doppler (bande de signal). Chaque bande de signal est propre à une des voies d'émission. L'emplacement des bandes de signal dans le spectre Doppler est déterminé en fonction de la rampe de phase appliquée à chaque voie d'émission. Ce qui caractérise plus particulièrement le troisième mode de réalisation est l'espacement entre chacune des bandes de signal : l'espacement entre chacune des bandes de signal est non uniforme : il existe au moins deux bandes de signal dont l'espacement (entre ces deux bandes) est différent de l'espacement entre les autres bandes de signal. En particulier, tous les espacements entre deux bandes de signal consécutives sont différents, mais cela n'est pas une condition nécessaire. Cet espacement non uniforme permet d'identifier facilement à quelles voies d'émission correspondent les échos, sans qu'il ne soit nécessaire d'éteindre une des voies. Ce mode de réalisation n'affecte donc pas le bilan radar.

Le troisième mode de réalisation comprend une troisième étape c) d'identification de la voie d'émission correspondant à chaque bande de signal, à partir de la représentation distance-Doppler des échos des formes d'ondes émises. Cette étape est identique à l'étape c) des deux premiers modes de réalisation.

Le spectre Doppler illustré en figure 5 représente six bandes de signal dont l'espacement est non uniforme dans la représentation distance-Doppler des échos des formes d'ondes émises. Dans la figure 5, l'espacement varie de $F_R/8$ à $F_R/6$ ; ces valeurs ne sont indiquées qu'à titre d'exemple.

Dans le troisième mode de réalisation, le signal d'écho a pour valeur la somme des puissances des échos reçus sur toutes les cases distance d'une bande de signal. Le signal d'écho a donc $NT_X$ valeurs positives.

Par ailleurs, le signal motif est non nul (il a par exemple pour valeur 1) pour chaque case fréquence $f(k)*F_R/NT_X$, pour $k = \{0, ..., NT_X-1\}$, et nul dans les autres cases fréquence, et $f()$ est une fonction représentative de l'espacement non uniforme. La fonction $f()$ peut donc définir une loi d'espacement. Par exemple, la loi d'espacement peut être linéaire ou encore logarithmique. Le signal motif est représenté sur autant de cases fréquence que le spectre Doppler des échos reçus.

Avantageusement, on détermine un espacement entre chacune des bandes de signal de façon à ce que la moyenne des espacements soit égale à $F_R/NT_X$.

Le signal d'intercorrélation correspond à la fonction d'intercorrélation entre le signal d'écho et le signal motif. Son maximum indique la première voie d'émission, à savoir celle pour laquelle la rampe de phase appliquée à l'émission est nulle.

Dans l'exemple de la figure 5, en superposant le signal d'intercorrélation et le spectre Doppler, il apparait que le maximum du signal d'intercorrélation correspond à la bande de signal la plus à gauche dans le spectre Doppler. La deuxième bande la plus à gauche correspond à la deuxième voie d'émission, et ainsi de suite.

Comme pour les deux premiers modes de réalisation, il est également possible de compléter le nombre de points d'acquisition de la FFT en rajoutant des zéros (« zero-padding ») à concurrence de points, ou d'adapter le nombre d'impulsions $N_{REC}$ par intervalle de traitement cohérent (CPI). Dans ce troisième mode de réalisation avec un espacement non uniforme, le nombre de points de FFT $N_{FFT}$, ou respectivement le nombre d'impulsions $N_{REC}$ doit être tel que l'écart de fréquence entre deux bandes consécutives, lié aux rampes de phase de la modulation DDMA, soit un nombre entier de cases fréquences, c'est-à-dire multiple entier de $F_R/N_{FFT}$, ou respectivement de $F_R/N_{REC}$.

Le procédé selon l'invention est particulièrement adapté à la bande millimétrique (bande W), pour des applications de radars automobiles ou encore de radars embarqués sur avions ou drones, sur cible fixe ou mobiles relativement au porteur.

## Revendications

1. Procédé de traitement de radar MIMO cohérent traitant des formes d'ondes DDMA et comprenant $NT_X$ voies d'émission et $NR_X$ voies de réception, comprenant les étapes de

    - a) génération de formes d'ondes sur au plus $NT_X$ voies d'émission, les formes d'ondes, modulo la fréquence $F_R$ de répétition des impulsions radar, étant identiques d'un émetteur à l'autre, à une rampe de phase près propre à chaque voie d'émission ;
    - b) génération, pour au moins une voie de réception, d'une représentation distance-Doppler des échos des formes d'ondes émises, où, pour chaque voie de réception, les échos d'une voie d'émission sur une pluralité de cases distance occupent au moins une case fréquence dans le spectre Doppler, appelée bande de signal, chaque bande de signal étant propre à une des voies d'émission, l'emplacement des bandes de signal dans le spectre Doppler étant déterminé en fonction de la rampe de phase appliquée à chaque voie d'émission, les formes d'ondes étant générées de façon à laisser non occupée une partie du spectre Doppler entre deux bandes de signal ;

- c) identification de la voie d'émission correspondant à chaque bande de signal, à partir de la représentation distance-Doppler des échos des formes d'ondes émises.

**2.** Procédé selon la revendication 1, dans lequel l'étape c) comprend les sous-étapes de :

- calcul d'un signal dit d'écho obtenu en sommant la puissance des échos de chaque bande de signal sur l'ensemble des cases distance ;
- génération d'un signal dit signal motif, sur autant de cases fréquence que la représentation distance-Doppler des échos des formes d'ondes émises, les voies d'émission étant numérotées par ordre croissant en fonction de la rampe de phase appliquée à la voie d'émission, le signal motif étant généré de telle sorte que les voies d'émission soient classées, selon l'ordre croissant, en tenant compte de la partie non occupée du spectre Doppler ;
- calcul d'un signal d'intercorrélation entre le signal d'écho et le signal motif ;
- identification de la voie d'émission correspondant à chaque bande de signal à partir du maximum du signal d'intercorrélation.

**3.** Procédé selon la revendication 2, dans lequel, dans l'étape d'identification, la position du maximum du signal d'intercorrélation correspond aux échos de la première voie d'émission dans le spectre Doppler, la première voie d'émission étant définie comme étant celle pour laquelle la rampe de phase est nulle.

**4.** Procédé selon l'une des revendications 2 ou 3, dans lequel la partie non occupée du spectre Doppler est obtenue en éteignant une des $NT_X$ voies d'émission, le signal motif étant non nul pour chaque case fréquence $k*F_R/NT_X$, où $k = \{0, ..., NT_X -1\}$, et nul dans les autres cases fréquence.

**5.** Procédé selon l'une des revendications 2 ou 3, dans lequel la partie non occupée du spectre Doppler est obtenue en déterminant les rampes de phase de façon à ce que les bandes de signal soient espacées de $F_R/NT_{X2}$ cases fréquence dans le spectre Doppler, où $NT_{X2}$ est un entier tel que $NT_{X2} > NT_X$, le signal motif étant non nul pour chaque case fréquence $k* F_R/NT_{X2}$, pour $k = \{0, ..., NT_X -1\}$, et nul dans les autres cases fréquence.

**6.** Procédé selon l'une des revendications précédentes, dans lequel la représentation distance-Doppler des échos est obtenue par une transformée de Fourier rapide (FFT) sur une pluralité de points d'acquisition, le nombre de points d'acquisition étant complété en rajoutant des zéros pour obtenir au total points, étant déterminé de façon à ce qu'il soit un multiple entier du nombre de voies d'émission $NT_X$, si $NT_X$ n'est pas une puissance de deux.

**7.** Procédé selon l'une des revendications 1 à 5, dans lequel la représentation distance-Doppler des échos est obtenue par une transformée de Fourier rapide (FFT) sur des séquences d'impulsions codées sur un intervalle de traitement cohérent (CPI), le nombre d'impulsions par intervalle de traitement cohérent (CPI) étant adapté pour rendre celui-ci multiple du nombre de voies d'émission.

**8.** Procédé de traitement de radar MIMO cohérent traitant des formes d'ondes DDMA et comprenant $NT_X$ voies d'émission et $NR_X$ voies de réception, comprenant les étapes de

- a) génération de formes d'ondes sur au plus $NT_X$ voies d'émission, les formes d'ondes, modulo la fréquence $F_R$ de répétition des impulsions radar, étant identiques d'un émetteur à l'autre, à une rampe de phase près propre à chaque voie d'émission ;
- b) génération, pour au moins une voie de réception, d'une représentation distance-Doppler des échos des formes d'ondes émises, où, pour chaque voie de réception, les échos d'une voie d'émission sur une pluralité de cases distance occupent au moins une case fréquence dans le spectre Doppler, appelée bande de signal, chaque bande de signal étant propre à une des voies d'émission, l'emplacement des bandes de signal dans le spectre Doppler étant déterminé en fonction de la rampe de phase appliquée à chaque voie d'émission, les formes d'ondes étant générées de façon à ce que l'espacement entre au moins deux bandes de signal consécutives soit différent de l'espacement entre les autres bandes de signal consécutives ;
- c) identification de la voie d'émission correspondant à chaque bande de signal, à partir de la représentation distance-Doppler des échos des formes d'ondes émises.

**9.** Procédé selon la revendication 8, dans lequel les espacements entre deux bandes de signal consécutives sont tous différents.

**10.** Procédé selon l'une des revendications 8 ou 9, dans lequel les bandes de signal sont espacées selon une loi d'espacement prédéterminée.

**11.** Procédé selon l'une des revendications 8 à 10, dans lequel l'espacement entre chacune des bandes de signal est déterminé de façon à ce que la moyenne des espacements soit égale à $F_R/NT_X$.

**12.** Procédé selon l'une des revendications 8 à 11, dans lequel la représentation distance-Doppler des échos est obtenue par une transformée de Fourier rapide (FFT) sur une pluralité de points d'acquisition, le nombre de points d'acquisition étant complété en rajoutant des zéros pour obtenir au total points, étant déterminé de façon à ce que l'espacement entre deux bandes consécutives soit un multiple entier de $F_R/N_{FFT}$.

13. Procédé selon l'une des revendications 8 à 11, dans lequel la représentation distance-Doppler des échos est obtenue par une transformée de Fourier rapide (FFT) sur des séquences d'impulsions codées sur un intervalle de traitement cohérent (CPI), le nombre d'impulsions $N_{REC}$ par intervalle de traitement cohérent (CPI) étant déterminé de façon à ce que l'espacement entre deux bandes consécutives soit un multiple entier de $F_R/N_{REC}$.

14. Procédé selon l'une des revendications précédentes, comprenant une étape supplémentaire de traitement de formation par le calcul, dans laquelle on combine, de façon pondérée, les formes d'ondes avec les échos provenant des différentes voies de réception.

15. Radar MIMO, **caractérisé en ce qu'**il est configuré pour mettre en œuvre le procédé selon l'une des revendications 1 à 14.

**Patentansprüche**

1. Verfahren zum Verarbeiten von kohärentem MIMO-Radar, das DDMA-Wellenformen verarbeitet und $NT_X$ Sendekanäle und $NR_X$ Empfangskanäle umfasst, das die folgenden Schritte umfasst:

- a) Erzeugen von Wellenformen auf höchstens $NT_X$ Sendekanälen, wobei die Wellenformen, modulo der Radarimpulswiederholfrequenz $F_R$, von einem Sender zum anderen identisch sind, auf eine für jeden Sendekanal spezifischen Phasenrampe genau;
- b) Erzeugen, für mindestens einen Empfangskanal, einer Doppler-Distanz-Darstellung der Echos der gesendeten Wellenformen, worin für jeden Empfangskanal die Echos eines Sendekanals über eine Vielzahl von Distanzzellen mindestens eine Frequenzzelle im Doppler-Spektrum belegen, Signalband genannt, wobei jedes Signalband für einen der Sendekanäle spezifisch ist, wobei die Lage der Signalbänder im Doppler-Spektrum anhand der Phasenrampe bestimmt wird, die auf jeden Sendekanal angewendet wird, wobei die Wellenformen so erzeugt werden, dass ein Teil des Doppler-Spektrums zwischen zwei Signalbändern unbelegt bleibt;
- c) Identifizieren des Sendekanals, der jedem Signalband entspricht, auf der Basis der Doppler-Distanz-Darstellung der Echos der gesendeten Wellenformen.

2. Verfahren nach Anspruch 1, wobei Schritt c) die folgenden Unterschritte umfasst:

- Berechnen eines Signals, das Echosignal genannt ist, das durch Summieren der Leistung der Echos jedes Signalbandes über alle Distanzzellen erhalten wird;
- Erzeugen eines Signals, das Mustersignal genannt ist, über so viele Frequenzzellen wie die Doppler-Distanz-Darstellung der Echos der gesendeten Wellenformen, wobei die Sendekanäle in aufsteigender Reihenfolge entsprechend der an den Sendekanal angelegten Phasenrampe nummeriert werden, wobei das Mustersignal so erzeugt wird, dass die Sendekanäle in aufsteigender Reihenfolge unter Berücksichtigung des unbelegten Teils des Doppler-Spektrums klassifiziert werden;
- Berechnen eines Interkorrelationssignals zwischen dem Echosignal und dem Mustersignal;
- Identifizieren des Sendekanals entsprechend jedem Signalband auf der Basis des Maximums des Interkorrelationssignals.

3. Verfahren nach Anspruch 2, wobei im Identifikationsschritt die Position des Maximums des Interkorrelationssignals den Echos des ersten Sendekanals im Doppler-Spektrum entspricht, wobei der erste Sendekanal als derjenige definiert ist, für den die Phasenrampe null ist.

4. Verfahren nach Anspruch 2 oder 3, wobei der unbelegte Teil des Doppler-Spektrums durch Abschalten eines der $NT_X$ Demissionskanäle erhalten wird, wobei das Mustersignal für jede Frequenzzelle $k*F_R/NT_X$, worin $k = \{0, ..., NT_X -1\}$, ungleich Null ist und in den anderen Frequenzzellen Null ist.

5. Verfahren nach Anspruch 2 oder 3, wobei der unbelegte Teil des Dopplerspektrums durch Bestimmen der Phasenrampen erhalten wird, so dass die Signalbänder $F_R/NT_{X2}$ Frequenzzellen im Dopplerspektrum auseinander liegen, worin $NT_{X2}$ eine ganze Zahl ist, so dass $NT_{X2} > NT_X$, wobei das Mustersignal für jede Frequenzzelle $k* F_R/NT_{X2}$, für $k = \{0,..., NT_X -1\}$, ungleich null ist und in den anderen Frequenzzellen null ist.

6. Verfahren nach einem der vorherigen Ansprüche, wobei die Doppler-Distanz-Darstellung der Echos durch eine schnelle Fourier-Transformation (FFT) an einer Vielzahl von Erfassungspunkten erhalten wird, wobei die Anzahl von Erfassungspunkten durch Hinzufügen von Nullen vervollständigt wird, um insgesamt Punkte zu erhalten, wobei so bestimmt wird, dass es ein ganzzahliges Vielfaches der Anzahl der Sendekanäle $NT_X$ ist, wenn $NT_X$ keine Zweierpotenz ist.

7. Verfahren nach einem der Ansprüche 1 bis 5, wobei die Doppler-Distanz-Darstellung der Echos durch eine schnelle Fourier-Transformation (FFT) auf Impulsfolgen erhalten wird, die auf einem kohärenten Verarbeitungsintervall (CPI) codiert sind, wobei die Anzahl der Impulse pro kohärentem Verarbeitungsintervall (CPI) so angepasst wird, dass sie ein Vielfaches der Anzahl der Sendekanäle ist.

8. Verfahren zum Verarbeiten von kohärentem MIMO-Radar, das DDMA-Wellenformen verarbeitet und $NT_X$ Sendekanäle und $NR_X$ Empfangskanäle umfasst, das die folgenden Schritte umfasst:

- a) Erzeugen von Wellenformen auf höchstens $NT_X$ Sendekanälen, wobei die Wellenformen, modulo der Radarimpulswiederholfrequenz $F_R$, von einem Sender zum anderen identisch sind, auf eine für jeden Sendekanal spezifische Phasenrampe genau ;
- b) Erzeugen, für mindestens einen Empfangskanal, einer Doppler-Distanz-Darstellung der Echos der gesendeten Wellenformen, worin für jeden Empfangskanal die Echos eines Sendekanals auf eine Vielzahl von Distanzzellen mindestens eine Frequenzzelle im Doppler-Spektrum belegen, Signalband genannt, wobei jedes Signalband für einen der Sendekanäle spezifisch ist, wobei die Lage der Signalbänder im Dopplerspektrum entsprechend der Phasenrampe bestimmt wird, die auf jeden Sendekanal angewendet wird, wobei die Wellenformen so erzeugt werden, dass der Abstand zwischen mindestens zwei aufeinanderfolgenden Signalbändern sich von dem Abstand zwischen den anderen aufeinanderfolgenden Signalbändern unterscheidet;
- c) Identifizieren des Sendekanals entsprechend jedem Signalband auf der Basis der Doppler-Distanz-Darstellung der Echos der gesendeten Wellenformen.

9. Verfahren nach Anspruch 8, wobei die Abstände zwischen zwei aufeinanderfolgenden Signalbändern alle unterschiedlich sind.

10. Verfahren nach Anspruch 8 oder 9, wobei die Signalbändern nach einem vorbestimmten Abstandsgesetz beabstandet sind.

11. Verfahren nach einem der Ansprüche 8 bis 10, wobei der Abstand zwischen den einzelnen Signalbändern so bestimmt wird, dass der Durchschnitt der Abstände gleich $F_R/NT_X$ ist.

12. Verfahren nach einem der Ansprüche 8 bis 11, wobei die Doppler-Distanz-Darstellung der Echos durch eine schnelle Fourier-Transformation (FFT) an einer Vielzahl von Erfassungspunkten erhalten wird, wobei die Anzahl der Erfassungspunkte durch Hinzufügen von Nullen, um insgesamt Punkte zu erhalten, vervollständigt wird, wobei so bestimmt wird, dass der Abstand zwischen zwei aufeinanderfolgenden Bändern ein ganzzahliges Vielfaches von $F_R/N_{FFT}$ ist.

13. Verfahren nach einem der Ansprüche 8 bis 11, wobei die Doppler-Distanz-Darstellung der Echos durch eine schnelle Fourier-Transformation (FFT) an Impulsfolgen erhalten wird, die über ein kohärentes Verarbeitungsintervall (CPI) codiert sind, wobei die Anzahl der $N_{REC}$-Impulse pro kohärentem Verarbeitungsintervall (CPI) so bestimmt wird, dass der Abstand zwischen zwei aufeinanderfolgenden Bändern ein ganzzahliges Vielfaches von $F_R/N_{REC}$ ist.

14. Verfahren nach einem der vorherigen Ansprüche, das einen zusätzlichen rechnerischen Formationsverarbeitungsschritt umfasst, bei dem die Wellenformen mit den Echos von den verschiedenen Empfangskanälen gewichtet kombiniert werden.

15. MIMO-Radar, **dadurch gekennzeichnet, dass** es so konfiguriert ist, dass es das Verfahren nach einem der Ansprüche 1 bis 14 implementiert.

**Claims**

1. A method for processing coherent MIMO radar processing DDMA waveforms and comprising $NT_X$ transmitters and $NR_X$ receivers, comprising the steps of

- a) generating waveforms on at most $NT_X$ transmitters, the waveforms, modulo the radar pulse repetition frequency $F_R$, being identical from one transmitter to the next, to within a phase ramp specific to each transmitter;
- b) generating, for at least one receiver, a range-Doppler representation of the echoes of the transmitted waveforms, where, for each receiver, the echoes of a transmitter over a plurality of range cells occupy at least one frequency cell in the Doppler spectrum, called signal band, each signal band being specific to one of the transmitters, the placement of the signal bands in the Doppler spectrum being determined as a function of the phase ramp applied to each transmitter, the waveforms being generated so as to leave a portion of the Doppler spectrum between two signal bands unoccupied;

- c) identifying the transmitter corresponding to each signal band, on the basis of the Range-Doppler representation of the echoes of the transmitted waveforms.

2. The method according to claim 1, wherein step c) comprises the sub-steps of:

- calculating a signal referred to as an echo signal obtained by summing the power of the echoes of each signal band over all of the range cells;
- generating a signal referred to as a pattern signal, over the same number of frequency cells as the Range-Doppler representation of the echoes of the transmitted waveforms, the transmitters being numbered in ascending order according to the phase ramp applied to the transmitter, the pattern signal being generated such that the transmitter are sorted, according to an ascending order, while taking into account the unoccupied portion of the Doppler spectrum;
- calculating a cross-correlation signal between the echo signal and the pattern signal;
- identifying the transmitter corresponding to each signal band on the basis of the maximum of the cross-correlation signal.

3. The method according to claim 2, wherein, in the identification step, the position of the maximum of the cross-correlation signal corresponds to the echoes of the first transmitter in the Doppler spectrum, the first transmitter being defined as being that for which the phase ramp is zero.

4. The method according to one of claim 2 or 3, wherein the unoccupied portion of the Doppler spectrum is obtained by switching off one of the $NT_X$ transmitters, the pattern signal being non-zero for each frequency cell $k*F_R/NT_X$, where $k = \{0, ..., NT_X -1\}$, and zero in the other frequency cells.

5. The method according to one of claim 2 or 3, wherein the unoccupied portion of the Doppler spectrum is obtained by determining the phase ramps such that the signal bands are spaced apart by $F_R/NT_{X2}$ frequency cells in the Doppler spectrum, where $NT_{X2}$ is an integer such that $NT_{X2} > NT_X$, the pattern signal being non-zero for each frequency cell $k* F_R/NT_{X2}$, for $k = \{0, ..., NT_X -1\}$, and zero in the other frequency cells.

6. The method according to one of the preceding claims, wherein the Range-Doppler representation of the echoes is obtained by means of a fast Fourier transform (FFT) on a plurality of acquisition points, the number of acquisition points being supplemented by adding zeros in order to obtain points in total, being determined such that it is an integer multiple of the number of transmitters $NT_X$, if $NT_X$ is not a power of two.

7. The method according to one of claims 1 to 5, wherein the Range-Doppler representation of the echoes is obtained by means of a fast Fourier transform (FFT) on pulse sequences coded over a coherent processing interval (CPI), the number of pulses per coherent processing interval (CPI) being adjusted so as to make it a multiple of the number of transmitters.

8. The method for processing coherent MIMO radar processing DDMA waveforms and comprising $NT_X$ transmitters and $NR_X$ receivers, comprising the steps of

- a) generating waveforms on at most $NT_X$ transmitters, the waveforms, modulo the radar pulse repetition frequency $F_R$ being identical from one transmitter to the next, to within a phase ramp specific to each transmitter;
- b) generating, for at least one receiver, a Range-Doppler representation of the echoes of the transmitted waveforms, where, for each receiver, the echoes of a transmitter over a plurality of range cells occupy at least one frequency cell in the Doppler spectrum, called signal band, each signal band being specific to one of the transmitters, the placement of the signal bands in the Doppler spectrum being determined as a function of the phase ramp applied to each transmitter, the waveforms being generated such that the spacing between at least two consecutive signal bands is different from the spacing between the other consecutive signal bands;
- c) identifying the transmitter corresponding to each signal band, on the basis of the Range-Doppler representation of the echoes of the transmitted waveforms.

9. The method according to claim 8, wherein the spacings between two consecutive signal bands are all different.

10. The method according to one of claim 8 or 9, wherein the signal bands are spaced apart according to a predetermined spacing law.

11. The method according to one of claims 8 to 10, wherein the spacing between each of the signal bands is determined such that the average of the spacings is equal to $F_R/NT_X$.

**12.** The method according to one of claims 8 to 11, wherein the Range-Doppler representation of the echoes is obtained by means of a fast Fourier transform (FFT) on a plurality of acquisition points, the number of acquisition points being supplemented by adding zeros in order to obtain points in total, being determined such that the spacing between two consecutive bands is an integer multiple of $F_R/N_{FFT}$.

**13.** The method according to one of claims 8 to 11, wherein the Range-Doppler representation of the echoes is obtained by means of a fast Fourier transform (FFT) on pulse sequences coded over a coherent processing interval (CPI), the number of pulses $N_{REC}$ per coherent processing interval (CPI) being determined such that the spacing between two consecutive bands is an integer multiple of $F_R/N_{REC}$.

**14.** The method according to one of the preceding claims, comprising an additional step of calculation-based forming processing, in which the waveforms are combined in a weighted manner with the echoes from the various receivers.

**15.** A MIMO radar, **characterised in that** it is configured to implement the method according to any one of claims 1 to 14.

FIG.1

FIG.2

FIG.3

FIG.4

Spectre
Doppler

$NT_X = 6$ ;
espacement
non uniforme

$F_R/8$   $F_R/6$

Signal d'écho

Signal motif

Position du
maximum

Signal d'inter
corrélation

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Airborne GMTI using MIMO techniques. **J. KANTOR ; S.K. DAVIS.** Technical Report 1150. Lincoln Laboratory, 2011